Europäisches Patentamt

European Patent Office

Office européen des brevets

(11) Veröffentlichungsnummer: **0 519 346 A1**

# (12) EUROPÄISCHE PATENTANMELDUNG

(21) Anmeldenummer: **92109917.2**

(22) Anmeldetag: **12.06.92**

(51) Int. Cl.5: **H01H 71/40**, H02H 9/02

(30) Priorität: **18.06.91 DE 4120005**

(43) Veröffentlichungstag der Anmeldung:
**23.12.92 Patentblatt 92/52**

(84) Benannte Vertragsstaaten:
**AT BE CH DE ES FR GB IT LI SE**

(71) Anmelder: **ABB PATENT GmbH**
**Kallstadter Strasse 1**
**W-6800 Mannheim 31(DE)**

(72) Erfinder: **Berthold, Rainer**
**Wielandstrasse 4**
**W-6901 Gaiberg(DE)**
Erfinder: **Baiatu, Tudor, Dr.**
**Schützenmatt 30**
**CH-5200 Brugg(CH)**

(74) Vertreter: **Rupprecht, Klaus, Dipl.-Ing.**
**c/o ABB Patent GmbH, Postfach 10 03 51**
**W-6800 Mannheim 1(DE)**

(54) **Schutzschalter.**

(57) Ein Schutzschalter besitzt einen auf Überströme, insbesondere Kurzschlußströme ansprechenden elektromagnetischen Auslöser (12) mit einer Spule (10, 11), zu der ein PTC-Widerstand (13) parallelgeschaltet ist. Damit der Innenwiderstand der Parallelschaltung insbesondere im Kurzschlußstromfall dem eines handelsüblichen, derzeit erhältlichen Leitungsschutzschalters entspricht und somit eine Strombegrenzung im Kurzschlußstromfall erzeugt wird, ist der Parallelschaltung ein Vorwiderstand (14) zugeordnet, der mit dem PTC-Widerstand eine bauliche Einheit bildet. Diese bauliche Einheit wird dadurch erzeugt, daß der Vorwiderstand an einem Kontaktvorsprung eine Ausnehmung aufweist, in die der als Drahtstück ausgebildete Vorwiderstand eingesetzt und darin elektrisch-galvanisch befestigt ist und gleichzeitig eine Hülse aufweist, die zur Befestigung eines Anschlußdrahtes Verwendung findet.

Fig.1

EP 0 519 346 A1

Die Erfindung betrifft einen Schutzschalter, insbesondere einen Leitungsschutzschalter, mit einem auf Überströme, insbesondere Kurzschlußströme ansprechenden elektromagnetischen Auslöser, zu dessen Auslösespule ein Widerstand mit positiver Temperaturcharakteristik parallelgeschaltet ist.

Schutzschalter, insbesondere Leitungsschutzschalter, müssen auf Überströme ansprechen bzw. Überströme abschalten, die als Kurzschlußströme oder Überlastströme auftreten.

Normale, handelsübliche Leitungsschutzschalter besitzen zur Abschaltung der Überlast ein Thermobimetall, welches direkt oder indirekt beheizt ist und sich bei einer Aufheizung durch einen Überlaststrom ausbiegt, wodurch eine Verklinkungsstelle in einem Schaltschloß geöffnet und eine Kontaktstelle in der abzusichernden Leitung geöffnet wird.

Diese Aufgabe wird erfindungsgemäß dadurch gelöst, daß mit der Parallelschaltung von Spule und PTC-Widerstand ein Vorwiderstand in Reihe geschaltet ist.

Im Hinblick auf kostensparende Fertigung kann es dabei vorteilhaft sein, den Vorwiderstand mit dem PTC-Widerstand als Baueinheit vorzusehen.

Eine besonders vorteilhafte Ausgestaltung besteht darin, daß einer der Kontaktanschlüsse des PTC-Widerstandes als eine Kontakthülse mit einer sacklochartigen Ausnehmung ausgebildet ist, in die der als Drahtstück ausgebildete Vorwiderstand eingesetzt ist, wobei der aus der Hülse herausragende Bereich des Drahtstückes so bemessen ist, daß der gewünschte Widerstandsbeiwert erreicht ist.

Der Vorwiderstand besteht aus einem handelsüblich erhältlichen Draht einer Widerstandslegierung, wobei die Höhe des Widerstandswertes durch den spezifischen Widerstand der Widerstandslegierung sowie durch den Querschnitt und durch die Länge des Drahtes festgelegt ist. Vorzugsweise werden ferritische Legierungen (FeCrAl), aufgrund ihrer hohen Oxidationsbeständigkeit, des höheren spezifischen Widerstandes und der geringeren Dichte verwendet, weil der höhere spezifische Widerstand eine Materialeinsparung und die geringere Dichte eine größere Anzahl von Elementen bei gleichem Volumen ermöglicht.

Wenn beispielsweise ein Vorwiderstand mit einen Widerstandswert von 100 m $\Omega$ bei einem spezifischen Widerstand $\rho = 1,4 \times 10^{-4}$ $\Omega$ cm eingesetzt werden soll, dann erhält man einen zylinderartigen Widerstand mit einen Durchmesser von 0,6 mm und einer Länge von 20,2 mm. Das Drahtstück ist dann so zu bemessen, daß sich die Länge von 20,2 mm außerhalb der Kontakthülse befindet.

Gemäß kennzeichnenden Merkmalen des Anspruches 3 ist es zweckmäßig, das Drahtstück in der Ausnehmung festzulöten, um den Übergangswiderstand von der Kontakthülse, also von dem Kontaktanschluß des PTC-Widerstandes zu dem Drahtstück zu reduzieren.

Nach einer weiteren Ausgestaltung kann die Kontakthülse eine seitliche Bohrung aufweisen, über die Lötmaterial ins Innere der Kontakthülse nach Einfügen des Drahtstückes einführbar ist. Die benötigte mechanische Festigkeit und der definierte elektrische Kontakt zwischen dem Drahtstück und dem PTC-Widerstand kann natürlich auch durch eine Quetschverbindung erzeugt werden; bevorzugt wird jedoch eine Lötverbindung, eine Hartlötverbindung oder eine Schweißverbindung, insbesondere Punktschweißverbindung.

Anhand der Zeichnung, in der ein Ausführungsbeispiel der Erfindung dargestellt ist, sollen die Erfindung, sowie weitere vorteilhafte Ausgestaltungen und Verbesserungen der Erfindung näher erläutert und beschrieben werden.

Es zeigen:

Figur 1    Ersatzschaltbild einer Parallelschaltung eines PTC-Widerstandes mit einer Spule eines elektromagnetischen Auslöser und einem Vorwiderstand in Serie,

Figur 2    die prinzipielle Zuordnung eines Vorwiderstandes zu einem PTC-Widerstand und

Figur 3    eine Ausführungsform der Verbindung eines PTC-Widerstandes mit einem Vorwiderstand.

Ein handelsüblicher Leitungsschutzschalter besitzt ein Gehäuse, in dem eine Kontaktstelle mit einem beweglichen und einem festen Kontaktstück untergebracht sind, dem ein Lichtbogenlöschblechpaket zugeordnet ist. Weiterhin besitzt der Leitungsschutzschalter ein Schaltschloß sowie einen thermischen und elektromagnetischen Auslöser; diese Elemente sind an sich bekannt und bedürfen hier keiner weiteren Beschreibung.

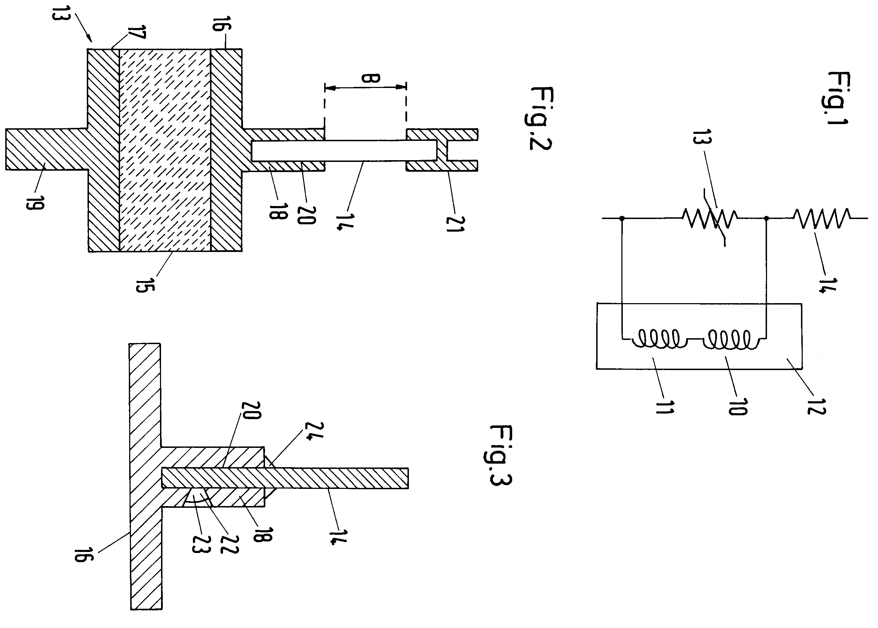

Die in Figur 1 gezeigte Schaltungsanordnung stellt ein Ersatzschaltbild des elektromagnetischen Auslösers dar, dessen Spule einen ohm'schen Widerstand 10 und eine Induktivität 11 aufweist. Insgesamt bilden beide den elektromagnetischen Auslöser 12, wobei der Schlaganker des elektromagnetischen Auslöser in der Figur 1 nicht dargestellt ist.

Parallel zu dem Widerstand 10 und der Induktivität 11 befindet sich ein Widerstand 13 mit einer positiven Temperaturcharakteristik, auch PTC-Widerstand genannt. In Reihe zu der Parallelschaltung von Spule bzw. Auslöser 12 und PTC-Widerstand 13 befindet sich ein Vorwiderstand 14, der als strombegrenzendes Widerstandselement ausgebildet ist.

Ohne den Vorwiderstand 14 ist der Innenwiderstand der Parallelschaltung kleiner als der heutiger Leitungsschutzschalter, so daß der durchfließende Strom größer ist als bei den zur Zeit im Handel befindlichen Leitungsschutzschalter, was natürlich nur für den Kurzschlußstromfall gilt. Wenn lediglich ein Überlaststrom ansteht, dann wird der PTC-Widerstand seine Wirkung auch ohne Vorwiderstand besitzen.

Der Vorwiderstand 14 wird also so bemessen, daß der Widerstand der Parallel-Reihenschaltung dem Innenwiderstand derzeitiger, handelsüblich erhältlicher Leitungsschutzschalter entspricht.

Die Figur 2 zeigt eine Anordnung, wie der Vorwiderstand 14 dem PTC-Widerstandselement 13 zuzuordnen ist. Handelsübliche PTC-Widerstandselemente 13 sind so aufgebaut, wie in Figur 2 dargestellt. Sie besitzen eine scheibenförmige PTC-Keramik 15, auf deren beiden Seiten jeweils ein Kontaktanschluß 16 bzw. 17 angebracht ist. Die Kontaktanschlüsse besitzen Vorsprünge 18 und 19, an denen elektrische Anschlußleiter angeschlossen werden können. Erfindungsgemäß ist der eine Vorsprung 18 mit einer sacklochartigen Ausnehmung 20 versehen, in die der als Drahtstück ausgebildete Vorwiderstand 14 eingesetzt werden kann. Das andere, freie Ende des Vorwiderstandes 14 ist mit einer Kontaktstelle 21 versehen, die zu einer Klemme des Leitungsschutzschalters führt. Der zwischen dem freien Stirnende des Vorsprunges 18 und der Kontaktstelle 21 befindliche Bereich B ist durch den erforderlichen Widerstandswert bestimmt. Um beispielsweise einen Widerstandswert von 100 m $\Omega$ zu erzielen, wenn der Vorwiderstand 14 aus einem Material mit einem spezifischen Widerstandswert von $\rho = 1{,}4 \times 10^{-4}$ $\Omega$ cm hergestellt wird, muß man die Länge B mit 20,2 mm und den Durchmesser des Vorwiderstandes 14 mit 0,6 mm bemessen. Das Material mit einem solchen spezifischen Widerstand ist beispielsweise der handelsübliche Widerstandsdraht Kanthal A.

Die Figur 3 zeigt das Kontaktstück 16 mit dem daran angebrachten Vorsprung 18. Der als Drahtstück ausgebildete Vorwiderstand 14 ist in die Ausnehmung 20 eingesetzt. Senkrecht zu der Ausnehmung 20 besitzt der Vorsprung 18 eine Querbohrung 22, die sich konisch nach außen erweitert und durch die Lötmaterial 23 ins Innere der Ausnehmung 20 eingefügt ist. Auch auf der Stirnfläche des Vorsprunges 18 ist Lötmaterial 24 angebracht.

Mit dem Lötmaterial wird die benötigte mechanische Festigkeit und der definierte elektrische Kontakt mit entsprechend geringem Übergangswiderstand zwischen dem Vorwiderstand 14 und dem Anschlußkontakt 16 erzeugt; die Lötung kann weich- oder hartlötend sein; es besteht auch die Möglichkeit, die elektrische und mechanische Verbindung durch eine Quetschverbindung oder durch Schweißen herzustellen.

Der elektrische Anschluß der Auslösespule 10, 11 erfolgt an den Vorsprüngen 18 und 19. Aufgrund des eingeprägten Stromes auf die Gesamtschaltung wird das prinzipielle Verhalten der thermischen Auslösefunktion der Parallelschaltung PTC-Widerstand 13/Auslösespule 10, 11 durch den zusätzlichen Vorwiderstand 14 nicht beeinflußt.

Bei der Ausgestaltung nach Figur 3 soll die Länge der Bohrung, d. h. also der Ausnehmung 20 bei einem Durchmesser von 0,6 mm für das Drahtstück des Vorwiderstandes 14 nicht weniger als 5 mm betragen, wobei der Durchmesser der Ausnehmung 20 um 0,1 mm größer ist als der Durchmesser des Drahtwiderstandes 14. Durch die Lötstellen 24, 23 wird eine Absenkung des Übergangswiderstandes zwischen dem Vorsprung 18 und dem Vorwiderstand 14 erzielt.

## Patentansprüche

1. Schutzschalter, mit einem auf Überstrom, insbesondere Kurzschlußstrom, ansprechenden elektromagnetischen Auslöser, zu dessen Auslösespule ein Widerstand mit positiver Temperaturcharakteristik (PTC-Widerstand) parallelgeschaltet ist, dadurch gekennzeichnet, daß die Parallelschaltung von Auslösespule (10, 11) bzw. Auslöser (12) und PTC-Widerstand (13) mit einem Vorwiderstand (14) in Reihe geschaltet ist.

2. Schutzschalter nach Anspruch 1, dadurch gekennzeichnet, daß der Vorwiderstand (14) mit dem PTC-Widerstand (13) als Baueinheit ausgebildet ist.

3. Schutzschalter nach Anspruch 1 oder 2, dadurch gekennzeichnet, daß einer der Kontaktanschlüsse (18) des PTC-Widerstandes (13) als eine Kontakthülse mit einer sacklochartigen Ausnehmung (20) ausgebildet ist, in die der als Drahtstück ausgebildete Vorwiderstand (14) eingesetzt ist, wobei der von den Kontakthülsen (18, 21) begrenzte Bereich des Drahtstückes (14) so bemessen ist, daß der gewünschte Widerstandswert erreicht ist.

4. Schutzschalter nach einem der Ansprüche 1 bis 3, dadurch gekennzeichnet, daß das Drahtstück (14) in der Ausnehmung (20) durch Quetschen und/oder Löten bzw. durch Quetschen und/oder Schweißen befestigt ist.

5. Schutzschalter nach Anspruch 4, dadurch gekennzeichnet, daß die Kontakthülse (18) eine seitliche Bohrung (22) aufweist, durch welche Lotmaterial (23) ins Innere der Kontakthülse nach Einfügen des Vorwiderstandes (14) einführbar ist.

Fig.1

Fig.2

Fig.3

Europäisches
Patentamt

# EUROPÄISCHER RECHERCHENBERICHT

Nummer der Anmeldung

EP 92 10 9917

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-B-2 610 951 (BBC)<br>* Spalte 2, Zeilen 22-53; Spalte 5, Zeile 29 - Spalte 6, Zeile 15; Abbildungen 1,2 *<br>--- | 1 | H 01 H 71/40<br>H 02 H 9/02 |
| A | FR-A-2 375 712 (BBC)<br>* Seite 3, Zeilen 13-32; Seite 5, Zeile 30 - Seite 7, Zeile 16; Abbildungen *<br>--- | 1 | |
| A,P | WO-A-9 112 643 (ABB)<br>* Anspruch 1; Abbildungen 1,7-9 *<br>--- | 1 | |
| A | DE-A-1 563 837 (STOTZ-KONTAKT)<br>* das ganze Dokument *<br>----- | 1 | |

| | RECHERCHIERTE SACHGEBIETE (Int. Cl.5) |
|---|---|
| | H 01 H<br>H 02 H |

Der vorliegende Recherchenbericht wurde für alle Patentansprüche erstellt

| Recherchenort | Abschlußdatum der Recherche | Prüfer |
|---|---|---|
| BERLIN | 14-09-1992 | NIELSEN K G |